Europäisches Patentamt

European Patent Office

Office européen des brevets

(11) Publication number: **0 435 677 A2**

# (12) EUROPEAN PATENT APPLICATION

(21) Application number: 90314351.9

(51) Int. Cl.⁵: **C04B 35/10, C04B 35/48**

(22) Date of filing: 27.12.90

(30) Priority: 28.12.89 JP 338102/89
17.04.90 JP 99197/90
18.04.90 JP 100359/90

(43) Date of publication of application:
03.07.91 Bulletin 91/27

(84) Designated Contracting States:
BE DE FR GB IT NL

(71) Applicant: Tosoh Corporation
4560, Kaisei-cho
Shinnanyo-shi, Yamaguchi-ken 746 (JP)

(72) Inventor: Kubota, Yoshitaka
7-37-17 Sagamiono
Sagamihara-shi, Kanagawa-ken (JP)
Inventor: Yamamoto, Shigemi
53 Imai-cho, Hodogaya-ku
Yokohama-shi, Kanagawa-ken (JP)
Inventor: Yamamura, Hiroshi
2-2-306, Tsutsujigaoka, Midori-ku
Yokohama-shi, Kanagawa-ken (JP)

(74) Representative: Kearney, Kevin David
Nicholas et al
KILBURN & STRODE 30 John Street
London, WC1N 2DD (GB)

(54) Alumina-zirconia composite sintered product and method for making the same.

(57) An alumina-zirconia composite sintered product which comprises a zirconia crystalline phase composed mainly of a tetragonal zirconia and an alumina crystalline phase is described. The sintered product has such a fine structure that regions of said alumina crystalline phase being separated with the zirconia crystalline phase at a size of from 0.1 to 2 μm on average. Preferably, the zirconia crystalline phase contains not larger than 4 mol% of yttrium oxide or not larger than 14 mol% of cerium oxide as a stabilizer. A method for making a starting composite powder and a method for making a composite sintered product using the composite powder are also described.

EP 0 435 677 A2

# FIGURE 1

A(45, 3.0)    D(85, 1.5)
B(45, 1.5)    E(54, 3.0)
C(85, 0.5)    F(54, 2.75)
              G(54, 1.70)
              H(85, 0.9)

Content of yttrium oxide in zirconia (mol%) vs. Content of alumina in sintered product (vol%)

# ALUMINA-ZIRCONIA COMPOSITE SINTERED PRODUCT AND METHOD FOR MAKING THE SAME

This invention relates to alumina-zirconia composite sintered products having high strength, high toughness and high hardness, a method for making such products and a method for preparing starting powders for the products.

Alumina has been conventionally utilized as a ceramic having good heat and abrasion resistances. Although the hardness of the alumina is as high as 2000 kg/mm$^2$ in terms of Vickers hardness, the strength is usually approximately 40 kg/mm$^2$ and may be approximately 80 Kg/mm$^2$ for the best one. In addition, the fracture toughness is about 3 MN/m$^{3/2}$ and, thus, alumina is so fragile that its application as a structural material utilizing the abrasion resistance is narrowed.

Many attempts have been made in order to improve the strength and the toughness of the alumina ceramics. One such attempt has been disclosed in Japanese Unexamined Patent Publication No. 52-86413 by Nils Claussen et al. In this attempt, pure zirconia particles having a size of from 2 to 15 μm are dispersed in a ceramic material using alumina as a matrix, by which microcracks are produced so as to improve the toughness. The fracture toughness arrives at 10 MN/m$^{3/2}$. In Japanese Unexamined Patent Publication No. 54-61215, the particle size of zirconia dispersed in alumina is controlled to be within a range of from 0.05 to 2.0 μm, so that tetragonal zirconia particles dispersed in the alumina can be retained at room temperature, resulting in a strength of 76 kg/mm$^2$ and a toughness of 9.6 MN/m$^{3/2}$. However, the alumina ceramics dispersing zirconia therein are unsatisfactory with respect to the strength.

From an angle different from the alumina ceramics dispersing zirconia, high-performance ceramics have been developed. This class is directed to ceramics mainly composed of zirconia and is disclosed, for example, in Japanese Unexamined Patent Publication No. 55-140762. More particularly, a co-precipitation technique is utilized wherein oxides of Y, Ca, Mg and the like serving as a stabilizer for zirconia are uniformly added so as to obtain a finer powder. The use of the powder can suppress the stabilizer necessary for ordinary stabilization to half the amount in an ordinary case. By this, ceramics consisting of tetragonal zirconia particles, which are in a metastable phase at room temperature, have been obtained. With the zirconia ceramics of the tetragonal crystal system, the tetragonal zirconia particles which are in a metastable phase are transformed into a monoclinic crystal system at the time of fracture, thus leading to high strength. A typical composition of the ceramic is a tetragonal zirconia ceramic to which 3 mol% of yttria is doped and has a strength of 120 kg/mm$^2$ and a toughness of 6 MN/m$^{3/2}$. In this connection, however, the Vickers hardness of the zirconia ceramic is as low as about 1250 kg/mm$^2$, which is unsuitable for use as abrasion-resistant, structural ceramics.

In order to further improve the hardness along with the strength of the zirconia sintered product, attempts have been made where alumina is added to the ceramics mainly composed of a tetragonal zirconia system. These are disclosed, for example, in Japanese Unexamined Patent Publication Nos. 60-86073 and 58-120571. In these attempts, while the strength and toughness of zirconia are utilized, it is contemplated to improve the hardness and strength by addition of alumina. In the former application, a composite product of 3 mol% yttria-doped tetragonal zirconia to which 28% by volume of alumina is added is imparted with a strength of 240 kg/mm$^2$ according to a hot isotactic pressing (HIP) method. Although this value is far higher than those expected in conventional ceramics, the hardness is assumed to be about 1450 kg/mm$^2$ by Vickers hardness because of the small content of alumina and the ceramic is not thus as having a satisfactory hardness for use as an abrasion-resistant material. In the latter application, a composite product of 2 mol% yttria-doped tetragonal zirconia to which 78% by volume of alumina is added is obtained and a strength of 120 kg/mm$^2$ is obtained by a hot pressing method. The content of alumina is so great that the hardness is assumed to be 1800 kg/mm$^2$ by Vickers hardness. However, this product is not satisfactory with respect to the strength and toughness.

In the foregoing, those ceramics using yttrium oxide as the stabilizer are set forth.

It is known that when cerium oxide is used as the stabilizer, a tetragonal zirconia produced by the action of cerium oxide is very likely to undergo transformation by application of stress, leading to high toughness or tenacity rather than strength.

With composite products of the high-strength and high-toughness tetragonal zirconia to which alumina is added so as to improve the hardness, as the amount of alumina is increased, the hardness is increased. However, it is not possible to increase the strength and toughness simultaneously with the hardness. At a certain point, the strength and toughness tend to lower. The reason why such a tendency is shown is considered as follows : with composite powders prepared by a powder mixing method or a co-precipitation method, zirconia particles and alumina particles have similar size distributions ; and the fine structure of a composite sintered product obtained from a mixed powder of such particles is not satisfactory because of the poor dispersibility of the alumina and zirconia particles or the tendency that the alumina particles and the zirconia particles are dispersed as independent particles. In short, it is difficult to separately control the sizes of the alumina particles and the zirconia particles. In such a structure, where the content of alumina is increased, cracks which are being developed during the course of fracture have a reduced possibility of meeting with zirconia particles dispersed in the composite sintered product. Accordingly, when alumina is increased in amount, the hardness is increased but the strength will be lowered at a certain level of the content. In addition, the toughness is lowered with a decrease in content of zirconia.

In the ceramics composed predominantly of a tetragonal zirconia and alumina, it has been very difficult to suppress lowerings of the strength and toughness but to improve the hardness at the same time.

It is accordingly an object of the invention to provide a sintered product of a tetragonal zirconia and alumina which overcomes the prior art disadvantages where it is difficult that the strength and roughness of composite sintered products of a tetragonal system zirconia and alumina are improved along with hardness, and which is improved not only in strength and toughness, but also in hardness.

It is another object of the invention to provide a method for preparing such a composite sintered product as mentioned above.

It is a further object of the invention to provide a method for preparing powders from which the sintered product is obtained.

The above objects can be achieved, according to one embodiment of the invention, by providing an alumina-zirconia composite sintered product which comprises a zirconia crystalline phase composed mainly of a tetragonal zirconia or zirconia containing not larger than 4 mol% of yttrium oxide or not larger than 14 mol% of cerium oxide and an alumina crystalline phase, the sintered product having such a fine structure that regions of said alumina crystalline phase being separated with the zirconia crystalline phase at a size of 0.1 to 2 $\mu$m on average.

According to another embodiment of the invention, there is provided a method for preparing an alumina-zirconia composite powder which comprises dispersing $\alpha$-alumina particles having an average particle size of from 0.1 $\mu$m to 2 $\mu$m in a zirconia sol having a zirconia dispersed phase having an average particle size of not larger than 0.1 $\mu$m, subjecting the resulting mixed dispersion to dehydration to obtain a dried matter, and calcining the dried matter to obtain a mixed powder of crystalline zirconia particles and the $\alpha$-alumina particles.

According to a further embodiment of the invention, there is also provided a method for making an alumina-zirconia composite sintered product which comprising shaping the mixed powder obtained by the above method and sintering the shaped powder to obtain an alumina-zirconia composite sintered product.

The present invention is described with reference to the accompanying drawings, in which :

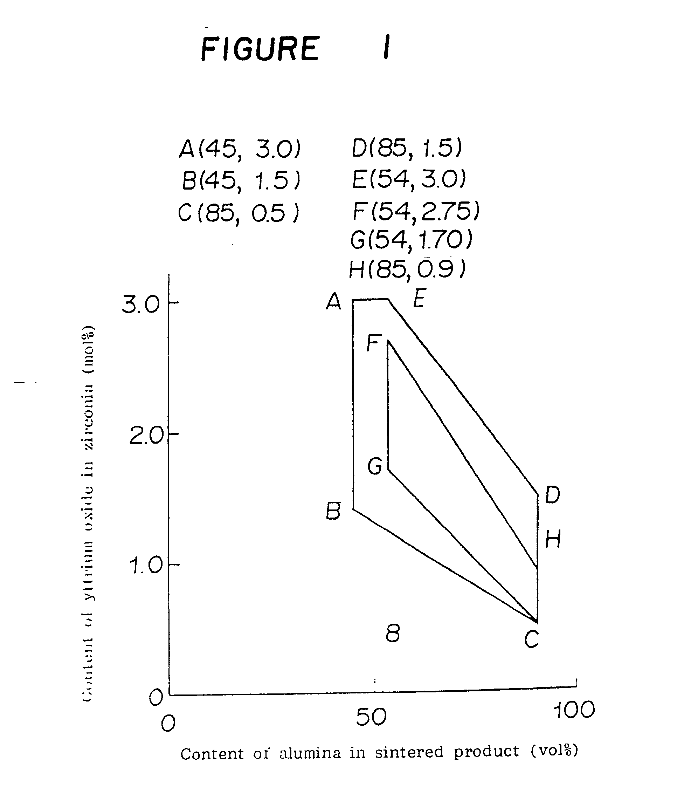

Fig. 1 is a graphical representation of the relation between the content of yttrium oxide in zirconia and the content of alumina in a sintered product containing yttrium oxide, necessary for attaining characteristics including a strength of not less than 140 kg/mm$^2$, a fracture toughness of not less than 4 MN/m$^{3/2}$ and a Vickers hardness of not less than 1500 kg/mm$^2$ ;

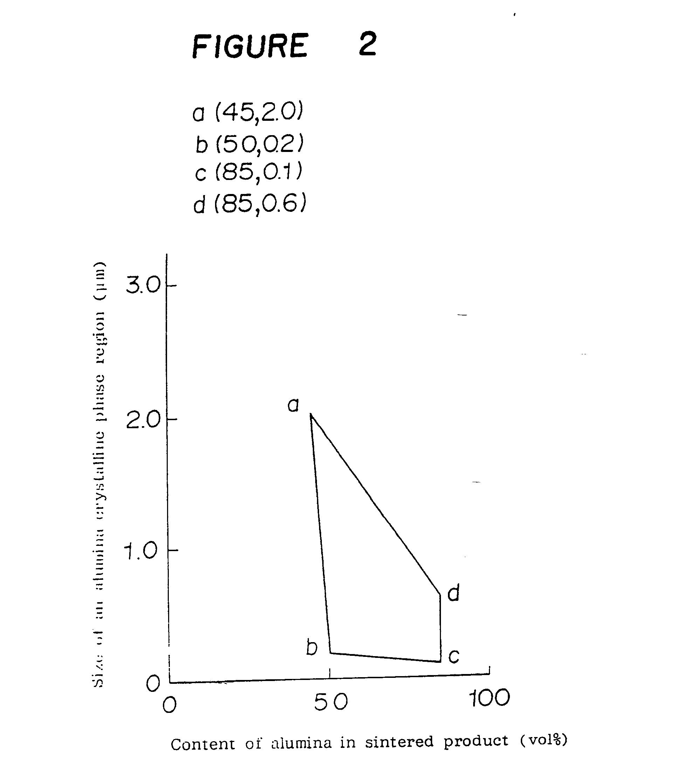

Fig. 2 is a graphical representation of the relation between the size of regions of the alumina crystalline phase and the content of alumina in a sintered product containing yttrium oxide, necessary for attaining characteristics including a strength of not less than 140 kg/mm$^2$, a fracture toughness of not less than 4 MN/m$^{3/2}$ and a Vickers hardness of not less than 1500 kg/mm$^2$ ;

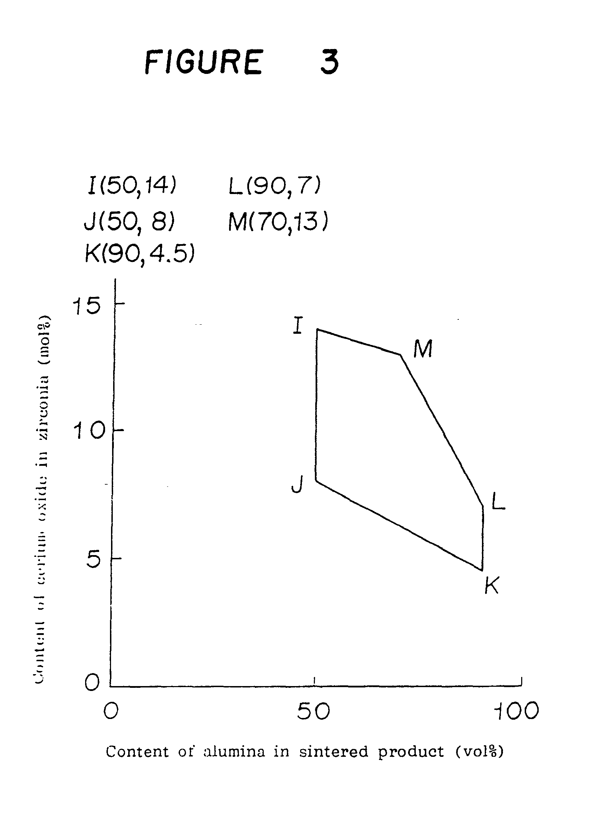

Fig. 3 is a graphical representation of the relation between the content of cerium oxide in zirconia and the content of alumina in a sintered product containing cerium oxide, necessary for attaining characteristics including a strength of not less than 100 kg/mm$^2$, a fracture toughness of not less than 4 MN/m$^{3/2}$ and a Vickers hardness of not less than 1400 kg/mm$^2$ ;

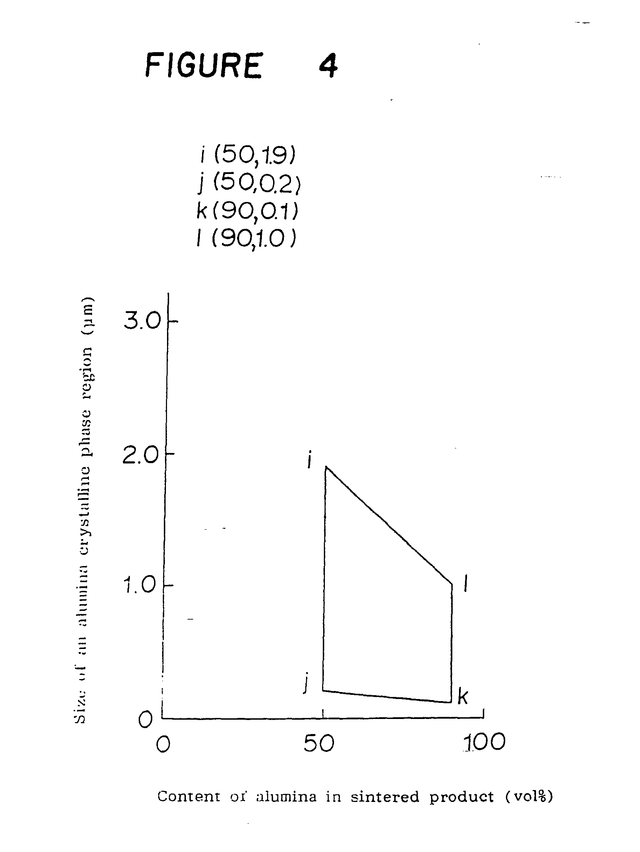

Fig. 4 is a graphical representation of the relation between the size of regions of the alumina crystalline phase and the content of alumina in a sintered product containing cerium oxide, necessary for attaining characteristics including a strength of not less than 100 kg/mm$^2$, a fracture toughness of not less than 4 MN/m$^{3/2}$ and a Vickers hardness of not less than 1400 kg/mm$^2$ ; and

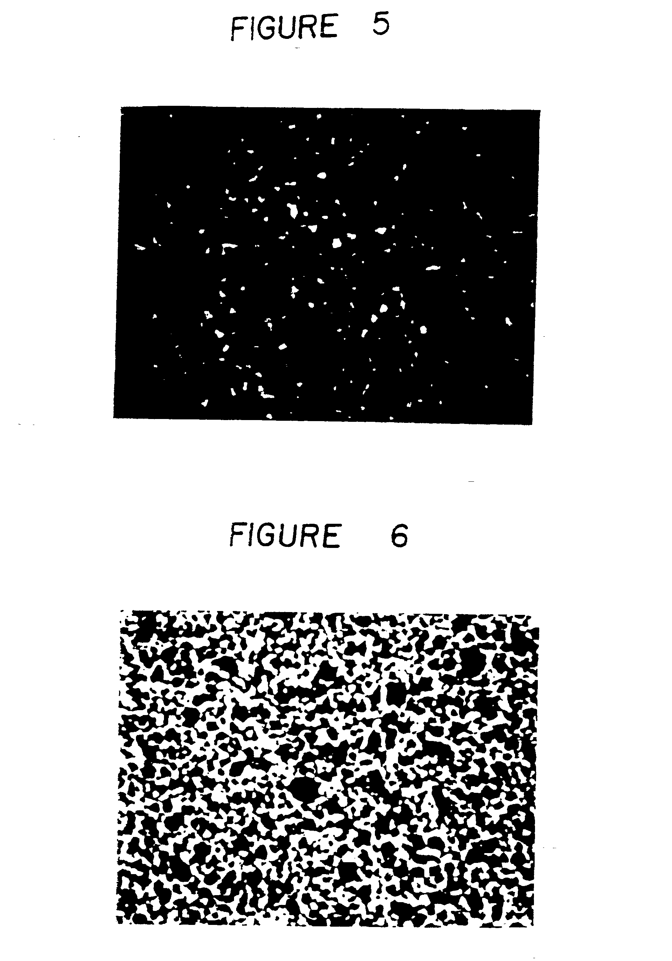

Figs. 5 and 6 are, respectively, scanning electron microphotographs of fine structures in section of sintered products Nos. 1 and 2 obtained in Example 1.

The composite sintered product may be obtained without subjecting any stabilizer to solid solution in a zirconia crystalline phase but when either yttrium oxide or cerium oxide is incorporated in the zirconia crystalline phase, a sintered product having higher strength is obtained. The amount of the stabilizer in the zirconia crystalline phase is not larger than 4 mol% for yttrium oxide and not larger than 14 mol% for cerium oxide. Over these ranges, the transformation effect decreases with a increase of the stability of tetragonal zirconia, with result that a final sintered product does not have high strength and high toughness.

The content of alumina is generally in the range of from 40 to 90% by volume. If the content is less than 40% by volume, the hardness of the resultant composite sintered product is as low as 1450 kg/mm$^2$, which is not significantly higher than those of a product consisting of a zirconia crystalline phase alone . On the other hand, over 90% by volume, it becomes difficult to make such a fine structure necessary for showing high strength and high toughness.

In order to increase the hardness of the sintered product, the content of alumina is increased. However, this leads to a relative reduction in content of zirconia, tending to lower the toughness and strength. To prevent the lowering, the content of yttrium oxide or cerium oxide in zirconia is decreased, so that the stability of zirconia is lowered, with a tendency toward transformation, by which the reduction in the effect of the transformation is compensated. In other words, the lowering in the stability of the tetragonal zirconia by reduction in amount of the stabilizer can be prevented by an increase in amount of alumina. For instance, if the content of yttrium oxide is not larger than 1.0 mol%, the amount of the monoclinic phase in zirconia crystals is liable to increase. Accordingly, the content of the alumina crystalline phase in the composite sintered product should be not less than about 50% by volume, preferably not less than 65% by volume. Alternatively, if the content of cerium oxide is not larger than 5 mol%, alumina should be contained in an amount of not less than about 70% by volume.

For the optimum value of an average size of regions of the alumina phase surrounded by the zirconia crystalline phase, there are upper and lower limits. The upper size should preferably be decreased from not larger than 2 μm to not larger than 0.6 μm with a decrease in content of yttrium oxide as is particularly shown in Fig. 2. Where cerium oxide is incorporated as a stabilizer in the zirconia crystalline phase, the upper limit of the average size of regions of the alumina phase surrounded by the zirconia crystals should preferably be decreased from not larger than 2 μm to not larger than 1 μm with a decrease in content of cerium oxide as is particularly shown in Fig. 4. This is because a smaller size of the region of the crystalline phase leads to higher stability of the tetragonal system and if the size becomes too small, the action of suppressing the transformation of the tetragonal system zirconia becomes more intense, so that the amount of the transformation at the time of fracture of a sintered product is reduced with a lowing of toughness. If the upper limit is exceeded, the effect of suppressing the transformation of the tetragonal system is lowered. Although the toughness is improved, the strength is lowered. If the concentration of the stabilizer is small, it is not possible to suppress the transformation of the tetragonal zirconia, leading to breakage of a sintered product.

The tetragonal zirconia in the zirconia crystal phase of a composite sintered product should preferably be not less than 70% by volume.

The regions of the alumina crystal phase surrounded by the zirconia crystal phase are so arranged that adjacent regions become closer to each other as the content of alumina increases with high possibility that the regions are in contact with each other. In this connection, it is sufficient that the respective regions are distinctly separated from each other although such regions are partially contacted. Fig. 5 shows a microphotograph in section of a composite sintered product having an alumina content of 70% by volume, revealing such a structure wherein the alumina crystalline phase (black) is uniformly dispersed in the zirconia crystalline phase (white) and is surrounded by the zirconia phase.

The sintered product of the invention having a fine structure wherein the zirconia phase uniformly surrounds the alumina crystalline phase can be obtained by uniformly dispersing the alumina particles in zirconia while suppressing the grain growth of the particles. The uniformity may be evaluated by scattering of comparisons of the ratio by volume of the zirconia crystalline phase and the alumina crystalline phase in a region with a given area with an average composition in a composite sintered product. The area of the given region may be determined as a ratio in area between zirconia and alumina in a rectangular area which has a size of 10 times an average size of alumina phase region. This can be measured by means of an X-ray microanalyzer. Alternatively, a scanning electron microscope or an Auger electron spectroscopic apparatus may be used to obtain a similar value. Usually, the fine structure of the invention wherein particles of the alumina crystalline phase are dispersed in the zirconia crystalline phase may be defined such that the scattering is within 20%, preferably within 10%, of the average composition.

The hardness of the composite material is controlled by the content of alumina, i.e. the hardness increases substantially linearly as the content is increased. In general, in order to obtain a Vickers hardness of not lower than 1500 kg/mm$^2$, it is necessary to add alumina in an amount of not less than 45% by volume. When yttrium oxide is used as a stabilizer, conditions necessary for achieving a strength of not less than 140 kg/mm$^2$, a fracture toughness of not less than 4 MN/m$^{3/2}$ and a Vickers hardness of not less than 1500 kg/mm$^2$, are that the contents of yttrium oxide, zirconia and alumina are defined within a range on the lines obtained by connecting points A(45, 3.0)-B(45, 1.5)-C(85, 0.5)-D(85, 1.5)-E(54, 3.0)-A(45, 3.0) of Fig. 1 (i.e. a content of alumina in a sintered product (% by volume) and a content of yttrium oxide in zirconia (mol%)) and surrounded by the lines, and the average size of regions of the alumina crystalline phase is defined within a range on the lines obtained by connecting points a(45, 2.0)-b(50, 0.2)-c(85, 0.1)-d(85, 0.6)-a(45, 2.0) of Fig. 2 (i.e. a content of alumina in a sintered product (% by volume) and a size of the region of the alumina crystalline phase (μm)) and surrounded by the lines.

Moreover, when the contents of yttrium oxide, zirconia and alumina are defined within a range on the lines obtained by connecting points F(54, 2.75)-G(54, 1.70)-C-H(85, 0.9)-F (i.e. a content of alumina in a sintered product (% by volume) and a size of the region of the alumina crystalline phase (μm)) and surrounded by the lines, and the average size of regions of the alumina crystalline phase is defined within a range on or surrounded by the above lines, there can be obtained characteristics including a strength of not less than 160 kg/mm$^2$, a fracture toughness of not less than 5 MN/m$^{3/2}$ and a Vickers hardness of not less than 1600 kg/mm$^2$.

When cerium oxide is used as a stabilizer, the necessary conditions for achieving a strength of not less than 100 kg/mm$^2$, a fracture toughness of not less than 4 MN/m$^{3/2}$ and a Vickers hardness of not less than 1400 kg/mm$^2$, the contents of cerium oxide, zirconia and alumina are defined within a range on the lines obtained by connecting points I(50, 14)-J(50, 8)-K(90, 4.5)-L(90, 7)-M(70, 13)-I(50, 14) of Fig. 3 (a content of alumina in a sintered product (% by volume) and a content of cerium oxide in zirconia (mol%)) and surrounded by the lines, and an average size of regions of the alumina crystalline phase is defined within a range on the lines obtained by connecting points i(50, 1.9)-j(50, 0.2)-k(90, 0.1)-l(90, 1.0)-i(50, 1.9) of Fig. 4 (a content of alumina in a sintered product (% by volume) and a size of the region of the alumina crystalline phase (μm)) and surrounded by the lines.

The strength of the sintered product set forth above is liable to suffer an influence of defects in the inside or cracks produced by surface processing. If these defects or cracks are present, such a strength as stated above may not always be obtained. The sintered product containing tetragonal zirconia may have a residual stress strongly left in the surface thereof when subjected to a surface processing method. In this case, the development of cracks which are produced by means of a Vickers indenter is suppressed by the residual surface stress and its length becomes short. Accordingly, the value of the fracture toughness may be evaluated as larger.

The method for making the composite product according to the present invention is described more particularly.

First, a method for making a composite powder used to obtain the composite sintered product of the invention is described.

The dispersion medium of a mixed dispersion wherein crystalline alumina particles having an average particle size of from 0.1 μm to 2 μm are dispersed in a zirconia sol having a zirconia dispersed phase having an average size of not larger than 0.1 μm, is water or an aqueous solution of an organic solvent, or an aqueous solution dissolving a salt of yttrium, calcium, magnesium, cerium or the like, which is converted to a stabilizer for zirconia by calcination. Examples of the organic solvents include alcohols having from 1 to 9 carbon atoms, acetone and the like.

The zirconia dispersed system which is one of the disrpsersed phases is colloid particles called hydrous zirconia or zirconium hydroxide, respectively. The particles are crystalline or amorphous and are ones which are confirmed as having a monoclinic structure according to the Raman spectroscopy. These particles are made of single or coagulated particles. The average particle size should be not larger than 0.1 μm. Over 0.1 μm, they are liable to precipitate in a solution with a lowering in dispersability with alumina.

The starting alumina used in the present invention is α-alumina particles. If other types of alumina particles are used, the crystal form will be changed at the time of firing or sintering, making it difficult to control the particle size and preventing the resultant sintered product form being densified. The average particle size should be within a range of from 0.1 μm to 2.0 μm. If the size is below this range, the resultant sintered product becomes low in fracture toughness. On the other hand, over the range, the strength is lowered with a lowering of sinterability.

The mixed dispersion can be prepared in the following manner.

Alumina particles are dispersed in the zirconia sol to obtain the mixed dispersion. The zirconia sol may be either a commercially available sol or a sol which is obtained by subjecting an aqueous solution of a water-soluble zirconium salt such as zirconium oxychloride to hydrolysis or neutralization by a usual manner, provided that the zirconia dispersed system has an average particle size of not larger than 0.1 μm. In the latter case, in order to remove residual chlorine, an ion exchange resin may be used for dechlorination. In case where an alumina-zirconia composite powder containing a stabilizer for zirconia is produced, water-soluble salts such as chlorides or nitrates of yttrium, magnesium, calcium, cerium and the like are added to the above-stated commercially available zirconia sol or the zirconia sol obtained from an aqueous solution of a zirconium salt, or to the aqueous solution of a zirconium salt.

Subsequently, an α-alumina powder is added to the resultant solution and usually dispersed by the use of a powdering or mixing machine such as a ball mill. The particle size of the alumina powder greatly influences the size of the alumina regions in a final composite sintered product. In order to obtain an intended size of the alumina regions in the composite sintered product, the alumina powder used should have a size which is equal to or smaller than the region size. This is because there is the tendency that owing to the growth of the alumina powder during the sintering or the insufficient dispersion of the alumina particles in the mixed powder, the alumina region size becomes, more or less, larger than the size of the alumina powder. In some case, the size may become smaller owing to the breakage into fine pieces prior to the sintering.

in this manner, the mixed solution is obtained. Organic solvents such as an alcohol or acetone may be added for preventing the particles from coagulation during the course of drying.

The mixed solution where the zirconia dispersing medium and the $\alpha$-alumina particles are sufficiently dispersed is dried by evaporation to dryness or dehydration under reduced pressure.

The resultant dried matter is generally calcined in air at 500°C to 1300°C. Preferably, the calcination is performed at 700 to 1200°C for about 2 hours in air. If the calcination temperature is lower than 500°C, not only the crystallization of zirconia does not proceed satisfactorily, but also moisture or organic matters which have not been removed by the drying cannot be fully removed. On the contrary, over 1300°C, crystalline zirconia particles in the powder become too great, resulting in a lowering of sinterability. When the crystalline zirconia particles grow to such an extent that its size is larger than that of the $\alpha$-alumina particles, it becomes difficult to provide a fine structure of a final composite product wherein the crystalline zirconia phase surrounds $\alpha$-alumina regions therewith. In this case, all the strength, fracture toughness and hardness cannot be improved. In order that the crystalline zirconia particles are made smaller in size than the $\alpha$-alumina particles, it is preferred that the specific surface area of the crystalline zirconia particles is kept at a level of not less than about 1.5 times that of the $\alpha$-alumina particles. For instance, when a mixed solution in which a dispersing medium of a zirconia dispersed system having an average size of 15 nm and $\alpha$-alumina particles having an average size of 0.2 $\mu$m (specific surface area 14 $m^2/g$) were so formulated that the content of the alumina after calcination was 70% by volume was dried, dehydrated and calcined at 900°C for 2 hours, the resultant composite powder had a specific surface area of 22.2 $m^2/g$. It does not seem reasonable that the particle size and the specific surface area are changed by the calcination. It is assumed that the particle sizes and the specific surface areas of the mixed powder are the same as those of the starting powders. From the assumption and the the specific surface area of the calcined mixed powder, the specific surface area of zirconia in the mixed powder can be calculated as 35 $m^2/g$, from which the average particle size can be calculated as about 15 nm. By the above assumption, the effect of the invention can be satisfactorily explained. The state of the composite powder of the invention is an important factor on which the fine structure of the sintered product is determined. The composite powder of the invention is a mixture of a fine zirconia powder and an alumina powder having a larger average particle size. According to the method of the invention, there can be obtained a mixed powder containing zirconia particles having a specific surface area of not less than 10 $m^2/g$. When the calcining temperature is in the range of from 700 to 1200°C, zirconia particles having a specific surface area of 15 to 50 $m^2/g$ are obtained. When compared with those particles having a specific surface area exceeding 50 $m^2/g$, the filling properties of the powder become better, resulting in better moldability. The average particle size of the alumina in the mixed powder is arranged in the range of from 0.1 to 2.0 $\mu$m, preferably from 0.1 to 1.6 $\mu$m.

In this manner, the mixed powder of the invention is obtained. Usually, the powder is subsequently subjected to powdering of coagulated particles by the use of a milling machine such as a ball mill or a dispersing machine such as of ultrasonic waves, thereby obtaining a powder for sintering according to the invention.

For the fabrication of a sintered product from the thus obtained mixed powder, there is obtained a shaped green body by a usual method such as press molding, hydrostatic molding using a rubber mold, cast molding, injection molding or the like.

The green body is sintered in an ordinary electric furnace in air at a temperature ranging from 1200°C to 1600°C. The sintering temperature greatly influences the characteristics of the sintered product. Over 1600°C, the particle size of zirconia becomes large with the tendency toward transformation of the tetragonal system zirconia, resulting in a high fracture toughness but a lowering of strength. For well balancing the strength, fracture toughness and hardness, the temperature is in the range of from 1200 to 1600°C, preferably from 1350 to 1550°C. When the sintering is continued at a temperature of not lower than 1300°C for 2 hours, the water absorption of the sintered product becomes substantially zero. If the product is subsequently subjected to hot isotactic pressing treatment as will be described hereinbelow, voids can be removed by the treatment, showing a better effect of improving the strength of the sintered product.

Where it is desired that the strength of the thus obtained sintered product is further improved, the hot isotactic pressing treatment (HIP) should preferably be effected. The treating conditions generally include a pressure of not less than 500 $kg/cm^2$, a temperature of from 1200°C to 1600°C, preferably from 1350°C to 1550°C. In order not to cause the crystal particles to be grown, the temperature is preferably effected at a level equal to or lower than the sintering temperature. The treating gas is an inert gas or an oxygen-containing inert gas. By this, there is obtained an alumina-zirconia composite sintered product having further improved strength along with good toughness and hardness.

The sintered product obtained after the HIP treatment is substantially free of any void with a remarkably improved strength.

The composite sintered product of the invention has a large content of alumina. At a compositional ratio which is assumed as dispersing zirconia in alumina, the product has such a structure where alumina is dispersed in zirconia. In this condition, the alumina is particles that are separated from one another substantially as independent particles in a zirconia crystalline phase.

Where the composite sintered product having such a structure as stated above is broken down, cracks predominantly develop along or in the crystalline layers of zirconia, so that the transformation effect of the dispersed zirconia can be utilized to a maximum. Accordingly, even in a composition where a very large amount of alumina is contained, the toughening mechanism of zirconia acts effectively. While keeping the high strength and high toughness inherent in the zirconia ceramics, the high hardness of alumina is achieved. Thus, the composite sintered product of the invention shows its effect owing to its specific type of fine structure.

In order to obtain such a composite sintered product, methods for making a starting composite powder and for fabricating a composite sintered product are important. Colloidal zirconia particles are used as a starting material for zirconia. The zirconia colloid particles are dispersed in a solution without coagulation although they are fine. In contrast, alumina particles are far large in size. Accordingly, the composite powder has such a structure that the individual alumina particles are sufficiently surrounded by fine zirconia particles. When the composite powder is sintered, the resultant product has a structure where alumina particles are dispersed in zirconia even when using a composition comprising not less than 50% by volume of alumina. In this condition, a fine structure is likely to form wherein alumina regions are substantially independently separated with zirconia crystalline phases.

On the other hand, with alumina-zirconia composite sintered products obtained by any known powder mixing method, when alumina is increased in amount in order to obtain high hardness, there is not formed a structure wherein a zirconia crystal phase surrounds the alumina phase therewith. When the sintered product is broken, the possibility of developing cracks in the alumina phase becomes higher than in the composite sintered product of the invention, with a smaller probability of causing the interaction with zirconia particles than in the case of the composite sintered product of the invention. This results in smaller strength and toughness.

As described above, the composite sintered product of the present invention has well-balanced high strength, high toughness and high hardness. Especially, with a product which is obtained using yttrium oxide as a stabilizer and and which is free of any internal defect by the HIP treatment, it has a strength of $204 \text{ kg/mm}^2$, a fracture toughness of $5.9 \text{ MN/m}^{3/2}$ and a Vickers hardness of $1760 \text{ kg/mm}^2$. Any known alumina-zirconia composite sintered product has never been known as having such good characteristics as mentioned above. If the HIP treatment is not effected, there are obtained good characteristics including a strength of not less than $100 \text{ kg/mm}^2$, a fracture toughness of not less than $4 \text{ MN/m}^{3/2}$ and a Vickers hardness of not less than $1500 \text{ kg/mm}^2$.

On the other hand, with a product which is obtained by the use of cerium oxide as a stabilizer and which is free of any internal defect by subjecting to the HIP treatment, there are obtained a strength of not less than $100 \text{ kg/mm}^2$, a fracture toughness of not less than $4 \text{ MN/m}^{3/2}$ and a Vickers hardness of not less than $1400 \text{ kg/mm}^2$. Any known alumina-cerium oxide-containing zirconia composite sintered product has never been known as having such good characteristics as mentioned above. When the HIP treatment is not effected, there are obtained good characteristics including a strength of not less than $70 \text{ kg/mm}^2$, a fracture toughness of not less than $4 \text{ MN/m}^{3/2}$ and a Vickers hardness of not less than $1400 \text{ kg/mm}^2$.

The alumina-yttrium oxide-containing zirconia composite sintered product and the alumina-cerium oxide-containing zirconia composite sintered product have a strength of not less than $100 \text{ kg/mm}^2$ with a very small scattering of measured values. Especially, with cerium oxide-containing composite sintered products, the scattering is very small. In examples of the present invention, its standard deviation is, in most case, within about 12% of the average strength, which proves the excellent effect of the present invention.

The sintered product containing cerium oxide as a stabilizer does not show any low temperature degradation phenomenon produced in a temperature range of from 200 to 400°C, and this is a difference from the product containing yttrium oxide.

As will be understood from Comparative example 6, the phase transformation into monoclinic system is not suppressed according to a known solid phase mixing method, thereby producing cracks. In the practice of the present invention, although stabilizers are added in small amounts, the resultant composite sintered product has good characteristics.

The present invention is more particularly described by way of examples.

## EXAMPLE 1

1.12 g of yttrium oxide was dissolved in 150 g of a zirconium oxychloride aqueous solution containing 30 g of zirconium oxide as calculated. The aqueous solution was refluxed at the boiling point for 70 hours to hydrolyze zirconium oxychloride. The zirconia particles had an average size of 15 nm.

45.7 g of an alumina powder having an average size of 0.4 μm was added to the hydrolyzed solution, and the mixture was placed in a ball mill which was filled to half of a polyethylene container with zirconia balls with a diameter of 3 mm, followed by sufficient dispersion of the alumina powder by rotation for 20 hours and drying under reduced pressure in a rotary evaporator. The resulting dried matter was calcined in an electric furnace in air at 900°C for 2 hours, followed by powdering by the use of the same ball mill as used above to obtain a zirconia-alumina composite powder.

The thus obtained powder was shaped in a mold and molded by the use of isotactic pressing machine at a pressure of 2 tons/cm$^2$. The molding was sintered in an electric furnace at 1500°C for 2 hours to obtain a zirconia-alumina composite sintered product. The water absorption of the sintered product was 0%.

Subsequently, the product was subjected to a hot isotactic pressing (HIP) machine under conditions of 1500 atmospheric pressures, 1400°C and 1 hour. The resulting sintered product had 70% by volume of regions of alumina crystals with an average size of 0.5 μm and a zirconia phase containing 2 mol% of yttrium oxide. In Table 1 (No. 1), the preparation conditions and the characteristics of the powder and the sintered product are shown.

A scanning-type electron microphotograph of the fine structure of the composite sintered product is shown in Fig. 5.

The section of the composite sintered product was polished to determine a content of alumina in a 5 μm square region at ten points on the surface according to an X-ray microanalyzer, with the result of a maximum content of 72% by volume and a minimum content of 68% by volume.

The above procedure was repeated, except that an alumina powder having an average particle size of 0.7 μm was used, thereby obtaining a composite sintered product of sample No. 2 indicated in Table 1, which had an average particle size of 0.9 μm and was made of 65% by volume of the alumina crystalline phase and a zirconia phase containing 2 mol% of yttrium oxide. The preparation conditions and the physical properties of the sintered product are shown in Table 1. A scanning-type electron microphotograph of a fine structure of the composite sintered product is shown in Fig. 6. When determined by an X-ray microanalyzer, the contents of alumina in a 9 μm square region at 10 points on the section of the composite sintered product were 66% by volume at maximum and 62% by volume at minimum.

Composite powders and sintered products were obtained in the same manner as described above. The preparation conditions different from those stated above are shown in Tables 1 and 2.

Table 1 (Example 1)

| No. | Composition | | Powder Characteristics | Atmospheric Sintering Temperature (°C) | HIP Temperature[3] (°C) | Characteristics of Sintered Product | | | | | |
|---|---|---|---|---|---|---|---|---|---|---|---|
| | Content of Yttrium Oxide[1] (mol%) | Content of Alumina[2] (vol%) | Average Particle Size of Alumina Powder ($\mu$m) | | | Average Particle Size of Zirconia Crystalline Phase ($\mu$m) | Content of Tetragonal System in Zirconia Crystalline Phase (vol%) | Average Size of Alumina Region ($\mu$m) | Strength (kg/mm²) | Fracture Toughness (MN/m3/2) | Vickers Hardness (kg/mm²) |
| 1 | 2.0 | 70 | 0.4 | 1450 | 1400 (Ar) | 0.2 | 95 | 0.5 | 170 ± 18 | 4.2 ± 0.2 | 1750 ± 40 |
| 2 | 2.0 | 65 | 0.7 | 1500 | 1400 (Ar) | 0.3 | 92 | 0.9 | 175 ± 16 | 5.8 ± 0.2 | 1640 ± 30 |

Note 1) The content of yttrium oxide is a content in a zirconia crystalline phase, i.e. it is based on the total of zirconia and yttrium oxide herein and whenever it appears hereinafter. This is also true of the content of cerium oxide in the following tables.

2) The content of alumina is in a sintered product herein and whenever it appears hereinafter.

3) (Ar) in the column "HIP Temperature" indicates that the HIP treatment is effected in an atmosphere of argon. (O₂) in the following tables indicates that the treatment is effected in an argon atmosphere containing 20% by volume of oxygen.

Table 2 (Example 1)

| No. | Composition | | Powder Characteristics | | | Sintering Temperature (°C) | Characteristics of Sintered Products | | | | |
|---|---|---|---|---|---|---|---|---|---|---|---|
| | Content of Yttrium Oxide (mol%) | Content of Alumina (vol%) | Average Size of Alumina Powder (μm) | Specific Surface Area of Alumina Powder (m²/g) | Specific Surface Area of Zirconia Powder (m²/g) | | Average Size of Zirconia Particles (μm) | Average Size of Alumina Region (μm) | Strength (kg/mm²) | Fracture Toughness (MN/m3/2) | Vickers Hardness (kg/mm²) |
| 3 | 2.0 | 50 | 0.6 | 3 | 34 | 1500 | 0.3 | 0.6 | 204 ± 6 | 6.9 ± 0.4 | 1520 ± 40 |
| 4 | 2.0 | 30 | 0.6 | 3 | 35 | 1500 | 0.3 | 0.6 | 230 ± 15 | 7.2 ± 0.2 | 1400 ± 30 |
| 5 | 1.5 | 70 | 0.2 | 14 | 36 | 1450 | 0.2 | 0.4 | 204 ± 14 | 5.9 ± 0.2 | 1760 ± 30 |
| 6 | 1.2 | 75 | 0.2 | 14 | 36 | 1450 | 0.2 | 0.4 | 200 ± 12 | 5.5 ± 0.2 | 1860 ± 40 |
| 7 | 1.0 | 80 | 0.2 | 14 | 34 | 1450 | 0.2 | 0.2 | 180 ± 17 | 5.0 ± 0.2 | 1880 ± 30 |
| 8 | 0 | 90 | 0.2 | 14 | 33 | 1400 | 0.2 | 0.2 | 150 ± 18 | 4.2 ± 0.2 | 1990 ± 30 |

## EXAMPLE 2

41.8 g of an alumina powder having an average particle size of 0.2 µm was added to a mixed solution of 24.5 g of a commercially available zirconia sol aqueous solution (having a concentration of 20 wt% calculated as zirconia) and 3.4 g of cerium nitrate (calculated as oxide), followed by mixing and dispersing in a ball mill for 15 hours. Thereafter, the mixture was dehydrated and dried under reduced pressure. The resultant dried matter was calcined at 900°C for 2 hours, followed by powdering in a ball mill for 40 hours to obtain a composite powder.

The powder was shaped in a mold and press-molded by the use of an isotactic pressing machine at a pressure of 2 tons/cm$^2$. The resulting molding product was sintered in an electric furnace at 1475°C for 2 hours to obtain a sintered product. The water absorption of the sintered product was 0%.

Subsequently, a HIP apparatus using an argon gas containing 20% by volume of oxygen gas was used for treatment at 1500 atmospheric pressures at 1400°C for 1 hour. The resultant sintered product (No. 1 in Table 3) was a composite sintered product which had 70% by volume of regions of alumina crystals having an average size of 0.4 µm and a zirconia layer having 9 mol% of cerium oxide. In Table 3 (Nos. 2 to 17), various compositions, and alumina powder particle sizes are shown along with powder characteristics and physical properties of sintered products obtained under different sintering conditions.

Table 3 (Example 2)

| No. | Composition | | Powder Characteristics | | | Sintering Temperature (°C) | Characteristics of Sintered Products | | | | |
|---|---|---|---|---|---|---|---|---|---|---|---|
| | Content of Cerium Oxide (mol%) | Content of Alumina (vol%) | Average Size of Alumina Powder ($\mu$m) | Specific Surface Area of Alumina Powder (m²/g) | Specific Surface Area of Zirconia Powder (m²/g) | | Average Size of Zirconia Particles ($\mu$m) | Average Size of Alumina Region ($\mu$m) | Strength (kg/mm²) | Fracture Toughness (MN/m³/²) | Vickers Hardness (kg/mm²) |
| 1 | 9 | 70 | 0.2 | 13 | 34 | 1475 | 0.3 | 0.4 | 136 ± 16 | 6.0 ± 0.2 | 1530 ± 20 |
| 2 | 9 | 70 | 0.4 | 4 | 30 | 1475 | 0.3 | 0.4 | 148 ± 6 | 6.2 ± 0.3 | 1550 ± 20 |
| 3 | 7 | 50 | 0.2 | 13 | 31 | 1450 | 0.2 | 0.2 | 88 ± 3 | 9.3 ± 0.2 | 1400 ± 20 |
| 4 | 8 | 50 | 0.2 | 13 | 34 | 1450 | 0.2 | 0.3 | 102 ± 4 | 8.6 ± 0.2 | 1400 ± 20 |
| 5 | 9 | 50 | 0.4 | 4 | 33 | 1475 | 0.3 | 0.5 | 112 ± 5 | 14 ± 0.2 | 1410 ± 30 |
| 6 | 12 | 50 | 0.6 | 3 | 31 | 1475 | 0.3 | 0.6 | 109 ± 3 | 13 ± 1.0 | 1440 ± 30 |
| 7 | 13 | 50 | 1.6 | 1 | 37 | 1500 | 0.4 | 1.4 | 101 ± 5 | 9 ± 0.5 | 1420 ± 20 |
| 8 | 9 | 60 | 0.6 | 3 | 34 | 1475 | 0.3 | 0.6 | 132 ± 6 | 8.3 ± 0.4 | 1510 ± 30 |
| 9 | 12 | 60 | 0.6 | 3 | 35 | 1500 | 0.4 | 0.5 | 138 ± 5 | 7.5 ± 0.2 | 1520 ± 30 |
| 10 | 7 | 70 | 0.2 | 14 | 32 | 1450 | 0.3 | 0.2 | 116 ± 8 | 13 ± 0.5 | 1610 ± 20 |
| 11 | 9 | 70 | 0.9 | 3 | 36 | 1450 | 0.3 | 0.6 | 141 ± 16 | 7.6 ± 0.4 | 1540 ± 20 |
| 12 | 12 | 70 | 0.6 | 2 | 34 | 1500 | 0.3 | 0.9 | 103 ± 12 | 5.9 ± 0.2 | 1580 ± 50 |
| 13 | 6 | 80 | 0.4 | 4 | 32 | 1475 | 0.2 | 0.4 | 115 ± 13 | 5.4 ± 0.2 | 1820 ± 20 |
| 14 | 9 | 80 | 0.6 | 3 | 35 | 1475 | 0.2 | 0.6 | 105 ± 15 | 6.6 ± 0.2 | 1860 ± 20 |
| 15 | 6 | 85 | 0.2 | 14 | 31 | 1450 | 0.2 | 0.2 | 124 ± 10 | 5.1 ± 0.1 | 1870 ± 20 |
| 16 | 5 | 90 | 0.2 | 14 | 33 | 1500 | 0.2 | 0.3 | 118 ± 13 | 4.1 ± 0.2 | 1900 ± 20 |
| 17 | 12 | 80 | 0.2 | 13 | 32 | 1450 | 0.3 | 0.3 | 120 ± 18 | 4.5 ± 0.2 | 1880 ± 20 |

EXAMPLE 3

Composite sintered products of different compositions and alumina phase region sizes were prepared using, as starting materials, a commercially available zirconia sol aqueous solution (having a concentration of 20 wt% calculated as zirconia), an yttrium oxide powder and an alumina powder. The yttrium oxide was used after dissolution in 2 m$\ell$ of concentrated hydrochloric acid in a necessary amount. The alumina powders used had average sizes of 0.2, 0.4, 0.6 and 1.6 $\mu$m. These powders were used singly or by mixing at given ratios to change the average particle size. Composite powders were prepared in the same manner as in Example 1 after preparation of mixed solutions. The conditions of preparing the powders and the sintered products are shown in Table 4. The HIP pressure was controlled at 1500 atms., and the atmosphere was made of argon. The characteristics of the resultant composite powders and sintered products are shown in Table 4.

Table 4 (Example 3)

| No. | Composition | | Powder Characteristics | | | | Sintering Temperature (°C) | Characteristics of Sintered Products | | | | |
|---|---|---|---|---|---|---|---|---|---|---|---|---|
| | Content of Yttrium Oxide (mol%) | Content of Alumina (vol%) | Average Size of Alumina Powder (μm) | Calcining Temperature of Dried Matter (°C) | Specific Surface Area of Alumina Powder (m²/g) | Specific Surface Area of Zirconia Powder (m²/g) | | Average Size of Zirconia Particles (μm) | Average Size of Alumina Region (μm) | Strength (kg/mm²) | Fracture Toughness (MN/m3/2) | Vickers Hardness (kg/mm²) |
| 1 | 2.5 | 50 | 1.6 | 1100 | 1 | 34 | 1500 | 0.3 | 0.6 | 155 ± 13 | 6.2 ± 0.4 | 1550 ± 40 |
| 2 | 1.2 | 60 | 0.6 | 1000 | 3 | 35 | 1500 | 0.3 | 0.6 | 153 ± 15 | 6.8 ± 0.2 | 1690 ± 30 |
| 3 | 1.5 | 60 | 0.2 | 1000 | 14 | 36 | 1450 | 0.2 | 0.4 | 171 ± 14 | 5.9 ± 0.2 | 1720 ± 30 |
| 4 | 2.2 | 60 | 1.0 | 900 | 1.5 | 36 | 1450 | 0.2 | 0.4 | 172 ± 12 | 5.1 ± 0.2 | 1630 ± 40 |
| 5 | 2.0 | 65 | 0.7 | 900 | 3 | 34 | 1450 | 0.2 | 0.6 | 179 ± 17 | 5.8 ± 0.2 | 1640 ± 30 |
| 6 | 2.0 | 70 | 0.4 | 800 | 4 | 39 | 1400 | 0.2 | 0.2 | 170 ± 18 | 4.2 ± 0.2 | 1730 ± 30 |
| 7 | 1.2 | 70 | 0.2 | 800 | 14 | 41 | 1450 | 0.3 | 0.3 | 174 ± 17 | 5.8 ± 0.3 | 1790 ± 30 |
| 8 | 1.0 | 70 | 0.2 | 800 | 14 | 37 | 1400 | 0.2 | 0.3 | 150 ± 16 | 6.3 ± 0.2 | 1750 ± 20 |
| 9 | 1.5 | 75 | 0.4 | 900 | 4 | 33 | 1450 | 0.3 | 0.4 | 200 ± 22 | 4.3 ± 0.3 | 1840 ± 30 |
| 10 | 1.2 | 80 | 0.6 | 900 | 3 | 34 | 1450 | 0.2 | 0.5 | 205 ± 20 | 4.2 ± 0.3 | 1850 ± 40 |
| 11 | 2.0 | 80 | 0.4 | 900 | 4 | 33 | 1550 | 0.2 | 0.5 | 147 ± 13 | 3.7 ±0.2 | 1900 ± 30 |
| 12 | 3.5 | 50 | 1.6 | 700 | 1 | 48 | 1450. | 0.4 | 0.9 | 112 ± 18 | 3.2 ± 0.2 | 1550 ± 20 |
| 13 | 0.5 | 70 | 0.2 | 700 | 14 | 49 | 1400 | 0.2 | 0.2 | 105 ± 10 | 8.9 ± 0.2 | 1660 ± 20 |
| 14 | 1.8 | 60 | 0.2 | 700 | 14 | 45 | 1400 | 0.2 | 0.2 | 187 ± 11 | 6.4 ± 0.2 | 1620 ± 30 |

## COMPARATIVE EXAMPLE 1

There were used as starting materials commercially available zirconia powders containing 1, 2 and 3 mol% of yttrium oxide and an average size of 0.6 $\mu$m (TZ-1Y, TZ-2Y and TZ-3Y, available from TOSOH CORPORATION), zirconia powders containing 9 and 12 mol% of cerium oxide and an average size of 0.6 $\mu$m, and alumina powders having sizes of 0.2 and 0.4 $\mu$m. The zirconia powders and the alumina powders were weighed in such amounts as to attain intended compositional ratios of zirconia and alumina, followed by mixing and powdering in a ball mill for 40 hours. After completion of the powdering, each mixture was dried and sintered in the same manner as in Examples 1 and 2 (for the case of Table 5 where the column, HIP temperature, is indicated as "-"). Part of the samples were further subjected to the HIP treatment.

The sintering conditions and physical properties of the sintered product are shown in Table 5.

The composition of alumina at ten points each in a 5 $\mu$m square region of the sintered product was 90% by volume at maximum and 46% by volume at minimum when subjected to an X-ray microanalyzer.

Table 5 (Comparative Example 1)

| No. | Composition | | Powder Characteristics | Atmospheric Sintering Temperature (°C) | HIP Temperature (°C) | Characteristics of Sintered Products | | | | | |
|---|---|---|---|---|---|---|---|---|---|---|---|
| | Content of Yttrium Oxide (mol%) | Content of Alumina (vol%) | Average Size of Alumina Powder ($\mu$m) | | | Average Size of Zirconia Crystalline Phase($\mu$m) | Content of Tetragonal System in Zirconia Crystalline Phase (vol%) | Average Size of Alumina Region ($\mu$m) | Strength (kg/mm²) | Fracture Toughness (MN/m³/²) | Vickers Hardness (kg/mm²) |
| 1 | 3 | 50 | 0.4 | 1450 | 1400(Ar) | 0.3 | 100 | 0.4 | 139 ± 21 | 4.8 ± 0.2 | 1590 ± 40 |
| 2 | 3 | 70 | 0.4 | 1450 | 1400(Ar) | 0.3 | 100 | 0.4 | 116 ± 21 | 4.2 ± 0.2 | 1680 ± 30 |
| 3 | 3 | 80 | 0.4 | 1450 | 1400(Ar) | 0.3 | 100 | 0.5 | 98 ± 15 | 3.8 ± 0.2 | 1810 ± 30 |
| 4 | 2 | 70 | 0.4 | 1450 | 1400(Ar) | 0.3 | 98 | 0.5 | 126 ± 20 | 4.7 ± 0.3 | 1650 ± 30 |
| 5 | 2 | 80 | 0.2 | 1450 | 1400(Ar) | 0.3 | 97 | 0.4 | 106 ± 23 | 4.3 ± 0.2 | 1820 ± 30 |
| 6 | 1 | 70 | 0.2 | 1450 | Crack | 0.3 | 90 | 0.4 | - | - | - |
| 7 | 3 | 70 | 0.2 | 1400 | - | 0.3 | 100 | 0.4 | 95 ± 18 | 4.6 ± 0.2 | 1620 ± 40 |
| 8 | 2 | 70 | 0.2 | 1400 | - | 0.3 | 100 | 0.4 | 106 ± 17 | 4.9 ± 0.2 | 1650 ± 30 |
| 9 | 1 | 70 | 0.2 | 1450 | Crack | 0.3 | 65 | 0.4 | - | | |

Table 5 (continued)

| No. | Composition | | Powder Characteristics | Atmospheric Sintering Temperature (°C) | HIP Temperature (°C) | Characteristics of Sintered Products | | | | | |
|---|---|---|---|---|---|---|---|---|---|---|---|
| | Content of Cerium Oxide (mol%) | Content of Alumina (vol%) | Average Size of Alumina Powder (µm) | | | Average Size of Zirconia Crystalline Phase (µm) | Content of Tetragonal System in Zirconia Crystalline Phase (vol%) | Average Size of Alumina Region (µm) | Strength (kg/mm²) | Fracture Toughness (MN/m³/²) | Vickers Hardness (kg/mm²) |
| 10 | 12 | 70 | 0.2 | 1500 | 1400(O₂) | 0.3 | 99 | 0.3 | 95 ± 20 | 4.9 ± 0.2 | 1620 ± 40 |
| 11 | 12 | 80 | 0.2 | 1500 | 1400(O₂) | 0.3 | 100 | 0.4 | 106 ± 16 | 4.7 ± 0.3 | 1660 ± 40 |
| 12 | 9 | 70 | 0.2 | 1500 | 1400(O₂) | 0.2 | 98 | 0.2 | 99 ± 15 | 6.0 ± 0.3 | 1610 ± 40 |
| 13 | 9 | 70 | 0.6 | 1500 | 1400(O₂) | 0.4 | 98 | 0.6 | 84 ± 15 | 6.1 ± 0.2 | 1590 ± 30 |
| 14 | 9 | 80 | 0.2 | 1500 | 1400(O₂) | 0.2 | 99 | 0.3 | 88 ± 17 | 5.6 ± 0.2 | 1700 ± 30 |
| 15 | 12 | 50 | 0.6 | 1500 | -- | 0.3 | 100 | 0.7 | 60 ± 10 | 8.0 ± 0.4 | 1400 ± 20 |
| 16 | 9 | 70 | 0.4 | 1500 | -- | 0.3 | 100 | 0.4 | 66 ± 8 | 7.0 ± 0.3 | 1600 ± 30 |
| 17 | 7 | 80 | 0.2 | 1500 | -- | 0.2 | 95 | 0.3 | 25 ± 8 | 7.1 ± 0.4 | 1760 ± 30 |

The methods of measuring the physical properties used in the examples are as follows.

Strength : strength by bending at three points as prescribed in JIS R 1601. The scattering of the strength is indicated by a standard deviation ($\sigma_{n-1}$) following the strength.

Toughness : a micro-indentation method using a Vickers hardness meter was used, in which a load of 20 kg and a load application time of 10 seconds were used. The toughness was calculated according to the following equation.

$$K_{1c} = 0.203 \times (c/a)^{-1.5} \times a^{1/2} \times H$$

wherein H is a Vickers hardness, a is a length of a diagonal line of a indent, and c is a median length of a crack produced from the tip of the diagonal line. In order to reduce the influence of a residual stress owing to the polishing, the surface of the sample was buffed with diamond abrasive with a size of 3.0μm for mirror polishing. Where a residual stress was left on the surface by the polishing step, the crack development was suppressed with the possibility a high fracture toughness was obtained.

Hardness : a micro Vickers hardness tester was employed using a load of 500 g and a load application time of 10 seconds.

Particle size of sintered product : a scanning-type electron microscope was used for observation at an acceleration voltage of 25 Kv. The accuracy is approximately ±0.1 μm.

Size of powder : a size distribution measuring instrument using a laser beam scattering was employed.

Tetragonal system : an X-ray diffraction method was used wherein a diffraction line intensity of the tetragonal system were compared with those of other monoclinic or cubic system. The surface being measured was polished with a #400 diamond wheel.

Compositional analysis of microregions : the composition was analyzed through observation with a scanning-type electron microscope and by the use of an X-ray microanalyzer.

The invention thus in summary extends to an alumina-zirconia composite sintered product which comprises a zirconia crystalline phase compound mainly of a tetragonal zirconia and an alumina crystalline phase, the said sintered product having a fine structure, such that regions of the said alumina crystalline phase which are separated by the zirconia crystalline phase, have a size of from 0.1 to 2 μm on average.

The invention also extends to an alumina-zirconia composite sintered product which comprises a zirconia crystalline phase compound mainly of a zirconia crystalline phase containing not more than 4 mol% of yttrium oxide or not more than 14 mol% of cerium oxide as a stabilizer and an alumina crystalline phase, the said sintered product having a fine structure such that regions of the said alumina crystalline phase, which are separated by the zirconia crystalline phase, have a size of from 0.1 to 2 μm on average.

The content of the alumina crystalline phase is preferably in the range of from 40 to 90% of volume.

In one embodiment yttrium oxide is used as a stabilizer, and the contents of the yttrium oxide and alumina lie within the ranges defined by the lines obtained by connecting points A(45, 3.0)-B(45, 1.5)-C(85, 0.5)- D(85, 1.5)-E(54 3.0)-A(45, 3.0) of fig. 1 (the content of alumina in a sintered product (% by volume) and the content of yttrium oxide in zirconia (mol%)) and the average size of regions of the alumina crystalline phase lies within the ranges defined by the lines obtained by connecting points a(45, 2.0)-b(50, 0.2)-c(85, 0.1)-d(85, 0.6)-a(45, 2.0) of Fig. 2 (the content of alumina in a sintered product (% by volume) and the size of the region of the alumina crystalline phase (μm)).

In another embodiment cerium oxide is used as a stabilizer, and the contents of cerium oxide and alumina lie within the ranges defined by the lines obtained by connecting points I(50, 14)-J(50, 8)-K(90, 4.5)-L(90, 7)-M(70, 13)-I(50, 14) of Fig. 3 (the content of alumina in a sintered product (% by volume) and the content of cerium oxide in zirconia (mol%)) and the average size of regions of the alumina crystalline phase lie within the ranges defined by the lines obtained by connection points i(50, 1.9)-j(50, 0.2)-k(90, 0.1)-1(90, 1.0)-i(50, 1.9) of Fig. 4 (the content of alumina in a sintered product (% by volume) and the size of the region of the alumina crystalline phase (μm)).

In a preferred form of the invention the average composition in a fine rectangular region having one side which is ten times an average of the size of the regions of the alumina crystalline phase in the said composite sintered product differs at any portion of the said composite sintered product, by no more than 20% from the average composition of the entirety of the composite sintered product.

Preferably the difference is no more than 10%.

The invention also extends to a method for preparing an alumina-zirconia composite powder which comprises dispersing α-alumina particles having an average particle size of from 0.1 μm to 2 μm in a zirconia sol having a zirconia dispersed phase having an average particle size of not larger than 0.1 μm, subjecting the resulting mixed dispersion to dehydration to obtain a dried mixture, and calcining the dried mixture to obtain a mixed powder of crystalline zirconia particles and α- alumina particles.

The dried mixture is preferably calcined at a temperature of from 500 to 1300°C.

The invention also extends to a method for making an alumina-zirconia composite sintered product which comprises shaping a mixed powder of crystalline zirconia particles and $\alpha$-alumina particles obtained by the method of the invention and sintering the shaped powder to obtain an alumina-zirconia composite sintered product.

In a preferred form of this method a sintered product obtained at a temperature of from 1300°C to 1600°C at normal pressure is subjected to hot isotactic pressing in an inert gas or in a mixed gas of oxygen and an inert gas at a temperature of from 1200 to 1600°C, provided that the treatment temperature is not higher than that used in the normal pressure sintering.

## Claims

1. An alumina-zirconia composite sintered product which comprises a zirconia crystalline phase composed mainly of a tetragonal zirconia and an alumina crystalline phase, said sintered product having such a fine structure that regions of said alumina crystalline phase being separated with the zirconia crystalline phase at a size of from 0.1 to 2 μm on average.

2. An alumina-zirconia composite sintered product which comprises a zirconia crystalline phase composed mainly of a zirconia crystalline phase containing not larger than 4 mol% of yttrium oxide or not larger than 14 mol% of cerium oxide as a stabilizer and an alumina crystalline phase, said sintered product having such a fine structure that regions of said alumina crystalline phase being separated with the zirconia crystalline phase at a size of from 0.1 to 2 μm on average.

3. The alumina-zirconia composite sintered product according to Claim 1 or 2, wherein the content of the alumina crystalline phase is in the range of from 40 to 90% by volume.

4. The alumina-zirconia composite sintered product according to Claim 2, wherein yttrium oxide is used as a stabilizer, and the contents of the yttrium oxide and alumina are defined within a range on the lines obtained by connecting points A(45, 3.0)-B(45, 1.5)-C(85, 0.5)-D(85, 1.5)-E(54, 3.0)-A(45, 3.0) of Fig. 1 (a content of alumina in a sintered product (% by volume) and a content of yttrium oxide in zirconia (mol%)) and surrounded by the lines, and an average size of regions of the alumina crystalline phase is defined within a range on the lines obtained by connecting points a(45, 2.0)-b(50, 0.2)-c(85, 0.1)-d(85, 0.6)-a(45, 2.0) of Fig. 2 (a content of alumina in a sintered product (% by volume) and a size of the region of the alumina crystalline phase (μm)) and surrounded by the lines.

5. The alumina-zirconia composite sintered product according to Claim 2, wherein cerium oxide is used as a stabilizer, and the contents of cerium oxide and alumina are defined within a range on the lines obtained by connecting points I(50, 14)-J(50, 8)-K(90, 4.5)-L(90, 7)-M(7O, 13)-I(50, 14) of Fig. 3 (a content of alumina in a sintered product (% by volume) and a content of cerium oxide in zirconia (mol%)) and surrounded by the lines, and an average size of regions of the alumina crystalline phase is defined within a range on the lines obtained by connecting points i(50, 1.9)-j(50, 0.2)-k(90, 0.1)-l(90, 1.0)-i(50, 1.9) of Fig. 4 (a content of alumina in a sintered product (% by volume) and a size of the region of the alumina crystalline phase (μm)) and surrounded by the lines.

6. The alumina-zirconia composite sintered product according to any of Claims 1 to 5, wherein an average composition in a fine rectangular region having one side which is ten times an average of regions of the alumina crystalline phase in said composite sintered product is scattered, at any portion of said composite sintered product, within 20% of an average composition of the entirety of the composite sintered product.

7. The alumina-zirconia composite sintered product according to Claim 6, wherein the scattering is within 10%.

8. A method for preparing an alumina-zirconia composite powder which comprises dispersing $\alpha$-alumina particles having an average particle size of from 0.1 μm to 2 μm in a zirconia sol having a zirconia dispersed phase having an average particle size of not larger than 0.1 μm, subjecting the resulting mixed dispersion to dehydration to obtain a dried matter, and calcining the dried matter to obtain a mixed powder of crystalline zirconia particles and the $\alpha$-alumina particles.

9. The method according to Claim 8, wherein the dried matter is calcined at a temperature of from 500 to 1300°C.

10. A method for making an alumina-zirconia composite sintered product which comprises shaping a mixed powder of crystalline zirconia particles and α-alumina particles obtained by the method defined in Claim 8 or 9 and sintering the shaped powder to obtain an alumina-zirconia composite sintered product.

11. The method according to Claim 10, wherein a sintered product obtained at a temperature of from 1300°C to 1600°C at normal pressure is subjected to hot isotactic pressing in an inert gas or in a mixed gas of oxygen and an inert gas at a temperature of from 1200 to 1600°C, provided that the treatment temperature is not higher than that used in the normal pressure sintering.

# FIGURE    I

A(45, 3.0)    D(85, 1.5)
B(45, 1.5 )    E(54, 3.0)
C(85, 0.5 )    F(54, 2.75)
          G(54, 1.70)
          H(85, 0.9 )

Content of yttrium oxide in zirconia (mol%)

Content of alumina in sintered product (vol%)

# FIGURE 2

a (45, 2.0)
b (50, 0.2)
c (85, 0.1)
d (85, 0.6)

# FIGURE 3

I(50,14)    L(90,7)
J(50, 8)    M(70,13)
K(90,4.5)

Content of cerium oxide in zirconia (mol%)

Content of alumina in sintered product (vol%)

# FIGURE 4

*i* (50,1.9)
*j* (50,0.2)
*k* (90,0.1)
*l* (90,1.0)

Content of alumina in sintered product (vol%)

FIGURE 5

FIGURE 6